Europäisches Patentamt

European Patent Office

Office européen des brevets

(19)

(11) Veröffentlichungsnummer: **0 004 626**
**B1**

(12) **EUROPÄISCHE PATENTSCHRIFT**

(45) Veröffentlichungstag der Patentschrift:
25.11.81

(51) Int. Cl.³: **G 01 S 15/10,** A 61 B 10/00

(21) Anmeldenummer: **79100909.5**

(22) Anmeldetag: **26.03.79**

(54) Verfahren und Schaltungsanordnung zur Anregung von Ultraschallschwingern, die in der Impuls-Echo-Technik eingesetzt werden.

(30) Priorität: 30.03.78 DE 2813729

(43) Veröffentlichungstag der Anmeldung:
17.10.79 Patentblatt 79/21

(45) Bekanntmachung des Hinweises auf die Patenterteilung:
25.11.81 Patentblatt 81/47

(84) Benannte Vertragsstaaten:
CH FR GB NL

(56) Entgegenhaltungen:
DE-B-2 629 562
US-A-2 651 012
US-A-3 274 821
US-A-3 360 769

(73) Patentinhaber: SIEMENS AKTIENGESELLSCHAFT Berlin und München, Postfach 22 02 61, D-8000 München 22 (DE)

(72) Erfinder: Hassler, Dieter, Flurweg 3, D-8521 Uttenreuth (DE)
Erfinder: Schwarz, Robert, Erlanger Strasse 6, D-8521 Hessdorf (DE)

# Verfahren und Schaltungsanordnung zur Anregung von Ultraschallschwingern, die in der Impuls-Echo-Technik eingesetzt werden

Die Erfindung bezieht sich auf ein Verfahren und eine Schaltungsanordnung zur Anregung von Ultraschallschwingern, insbesondere mit Güten von $Q < 5$, die in der Impuls-Echo-Technik, insbesondere bei der Untersuchung des menschlichen Körpers, eingesetzt werden, wobei zur Anregung im Sinne der Aussendung eines Ultraschall-Impulses dem Ultraschallschwinger eine vorgebbare Zahl von Perioden einer Sinus- oder sinusähnlichen Erregungsschwingung, z. B. auch Dreieckschwingung, mit solcher Frequenz zugeführt wird, die den Ultraschallschwinger in seiner Nutzresonanzfrequenz anregt, und wobei im Anschluß daran zur Kompensation von Nachschwingungen dem Ultraschallschwinger ein Sinus- bzw. sinusähnliches Stoppsignal mit einem Phasensprung von 180° gegenüber der Phasenlage der Erregungsschwingung zugeleitet wird.

Ultraschallschwinger der genannten Art werden insbesondere in der sogenannten B-Technik eingesetzt, wo also ein Untersuchungsobjekt, z. B. menschlicher Körper, zeilenweise mit Ultraschallimpulsen abgetastet wird und die aus dem Objekt empfangenen Echosignale entsprechend zeilenweise zum flächenhaften Echo-Sichtbild an einer Aufzeichnungsvorrichtung (z. B. Oszillograph) aufgezeichnet werden. Ebensogut kann es sich jedoch bei den Schwingern um solche der A-Technik oder einer sonstigen Abtasttechnik handeln. Im Falle der B-Technik kann der Schwinger ein sogenannter Rotationsschwinger mit Paraboloidreflektor sein. Es kann ebensogut auch ein linear verschiebbarer Schwinger bzw. ein schwenkbarer Schwinger für beispielsweise Sektor-Scan sein. Darunter fallen schließlich auch Schwinger eines Compund-Scan-Systems und insbesondere auch sogenannte Ultraschall-Arrays, wo eine Vielzahl nebeneinander angeordneter Ultraschallschwinger in zeitlicher Aufeinanderfolge erregbar ist.

In sämtlichen dieser Anwendungsfälle erfolgt die elektrische Anregung der Ultraschallschwinger (insbesondere Piezoschwinger) im Normalfall durch einen kurzen Impuls sehr hoher Amplitude (einige 100 V). Dieser Art der Anregung ist hinsichtlich Nutzen und elektronischem Aufwand die effektivste Methode, solange die Spannungsamplituden keiner wesentlichen Einschränkung unterliegen. Solche Einschränkungen ergeben sich jedoch automatisch, wenn zur Ansteuerung von Ultraschallschwingern elektronische Schalter eingesetzt werden sollen, die aufgrund räumlicher und funktioneller Dimensionierung in der maximalen Schaltspannung begrenzt sind. Ein besonderes Sachgebiet ist hier die Array-Technik, wo jedem Einzelschwinger ein oder mehrere elektronische Schalter zugeordnet sein müssen. Aus Kostengründen und auch aus Gründen besserer Raumausnutzung besteht Interesse am Einsatz von integrierten Schaltern. Die maximale Schaltspannung derartiger Schalter ist jedoch im allgemeinen auf ca. 30 bis 40 V beschränkt. Der Einsatz von Schaltern mit solch begrenzter Schaltspannung führt also zu einer beträchtlichen Verkleinerung der anregenden Spannungsamplitude; dies bedeutet im Anwendungsfall (z. B. am menschlichen Körper) einen erheblichen Verlust an Eindringtiefe für die Ultraschallsendeimpulse.

Einen Ausweg aus dieser Problematik bietet nun der Einsatz von Verfahren und Schaltungsanordnungen der eingangs genannten Art, wonach also ein Ultraschallschwinger in seiner Nutzresonanzfrequenz angeregt wird und im Anschluß daran dem Ultraschallschwinger ein Stoppsignal in dem Sinne zugeleitet wird, daß Nachschwingungen des Schwingers ausgelöscht werden. Ein Verfahren dieser Art und eine Schaltungsanordnung zur Durchführung dieses Verfahrens sind beispielsweise aus der US-PS 35 32 911 vorbekannt. Beim Gegenstand dieser US-PS wird der Ultraschallschwinger mit einer vorgegebenen Zahl von Sinusschwingungen angeregt; auf die Erregungsschwingungen folgt schließlich der Sinus-Stoppimpuls mit gleicher Amplitude, aber mit um 180° gedrehter Phase, dessen Dauer t dadurch bestimmt wird, daß mathematisch der Hüllkurvenverlauf des Ausschwingvorganges des Ultraschallschwingers gleich dem Hüllkurvenverlauf seines Einschwingvorganges gesetzt wird, deren gemeinsamer Schnittpunkt die erforderliche zeitliche Länge t des anzulegenden Stoppsignales bestimmt. Durch dieses Verfahren erhält man in Abhängigkeit von den die Güte Q des Schwingers bestimmenden Parametern Stoppimpulsbreiten, die zwischen ganzzahligen Periodendauern liegen, also Impulsbreiten von z. B. 0,8 oder 1,1 oder 1,4 mal der Periodendauer der verwendeten Sinusschwingung. Derartige Stoppimpulse mit gebrochener Schwingungsdauer haben jedoch nicht zu vernachlässigende Oberwellenanteile und führen demgemäß zu Bedämpfungsfehlern.

Durch die US-PS 26 51 012 ist ferner noch ein Ansteuersystem für einen Ultraschallschwinger vorbekannt, das bei üblicher breitbandiger Impulsanregung nach vorgebbarer Zeitverzögerung eine Zeitschwingung erzeugt, die der Wirkung des primären Anregimpulses entgegengesetzt gerichtet ist. Bei diesem Schwingungssystem ist aber die nach Abgabe des primären Anregimpulses exponentiell abklingende Wandlerschwingung in der Anzahl der Schwingungen völlig unbestimmt. Die Zahl der Schwingungen hängt von einer Vielzahl von Parametern, beispielsweise akustischem Wellenwiderstand des Schallausbreitungsmediums, ab. Bezogen auf eine derartige Abklingschwingung mit unbestimmter Zahl von Schwingungen muß dann die verzögert hinzuzuführende Kompensationsschwingung, die bei amplitudenmäßig exakt gleichem Dämpfungsverlauf aus einer Reihe von Schwingungsperioden besteht, auch stets die gleiche Phasenverschiebung von 180°, bezogen auf die abklingenden Schwingungen der Primäranregung, haben. Derartige Bedingungen sind jedoch praktisch kaum oder nur unter besonders hohem schaltungstechnischem Aufwand zu erreichen. Die formgebenden Abstimmkreise in den beiden Impulskanälen gewähren von sich aus kaum sichere Abstimmung von Primärschwingung und Kompensationsschwingung auch bei Einsatz von Schwingern mit konstant vorgegebenen Eigenschaften. Ein Wechsel eines solchen Schwingers zu einem mit anderen Eigenschaften führt also bereits zu einer vollständigen Verstimmung der gesamten Ansteueranordnung. Es ist also Nachstimmung nötig, die bei dem beschriebenen Ansteuersystem an einer Vielzahl von Einzelabstimmgliedern, wie Abstimmkondensatoren, Abstimminduktivitäten und Abstimmwiderständen, erfolgen muß.

Aufgabe der Erfindung ist es, einen Weg aufzuzeigen, wie ein Ultraschallschwinger beliebiger Güte Q, insbesondere aber auch ein solcher mit Q <5, mit niedrigster Anregespannung unter optimaler Bedämpfung angeregt werden kann.

Die Aufgabe wird mit einem Verfahren der eingangs genannten Art erfindungsgemäß dadurch gelöst, daß das Stoppsignal genau aus einer einzelnen vollendeten Schwingperiode besteht, und daß es in der Amplitude auf einen solchen Wert bis etwa um die Hälfte kleiner als die Amplitude der Erregunsschwingung eingestellt wird, daß am Periodenende des Stoppsignals die Auslöschung der ausgesandten Ultraschallschwingung erreicht wird.

Eine Schaltungsanordnung zur Durchführung des Verfahrens umfaßt eine Oszillatoreinrichtung, die den Ultraschallschwinger mit einer vorgebbaren Zahl von Perioden einer Sinus- oder sinusähnlichen Erregerschwingung mit einer den Ultraschallschwinger in seiner Nutzresonanzfrequenz anregenden Frequenz beaufschlagt und im Anschluß daran ein Sinus- bzw. sinusähnliches Stoppsignal mit einem Phasensprung von 180° erzeugt, und sie ist erfindungsgemäß dadurch gekennzeichnet, daß die Oszillatoreinrichtung so ausgebildet ist, daß das erzeugte Stoppsignal genau aus einer einzelnen vollendeten Schwingungsperiode besteht und amplitudenmäßig auf Werte bis etwa um die Hälfte kleiner als die Amplitude der Erregungsschwingung einstellbar ist.

Im Unterschied zum Gegenstand der US-PS 35 32 911 arbeitet vorliegende Erfindung also mit einem Stoppsignal, dessen Dauer unabhängig von der Güte Q des verwendeten Schwingers immer aus einer einzelnen vollendeten Schwingperiode besteht. Zur Einstellung auf unterschiedliche Gütewerte, insbesondere solche mit Q <5, ist die Amplitude des Stoppsignals auf Werte einstellbar, die kleiner sind als die Amplitude der Erregungsschwingung. Beim Gegenstand der US-PS 35 32 911 haben im weiteren Gegensatz hierzu Stoppsignal und Erregungsschwingung immer gleich hohe Amplituden. Die kompensierte Sinusanregung gemäß der Lehre vorliegender Erfindung ermöglicht auf diese Weise eine optimale Anregung von Ultraschallschwingern, insbesondere solche mit einer Güte Q <5.

In vorteilhafter Ausgestaltung der Erfindung wird der Ultraschallschwinger mit zwei Perioden einer Sinus- oder sinusähnlichen Schwingung beaufschlagt, die den Schwinger in seiner Nutzresonanzfrequenz anregen und an die sich dann das Stoppsignal in Form einer dritten Periode Sinus- bzw. sinusähnlicher Schwingung mit etwa halber Amplitude und mit einem Phasensprung von 180° anschließt. Diese Ausgestaltung führt zu optimal kurzen Anregungsimpulsen.

Weitere Vorteile und Einzelheiten der Erfindung ergeben sich aus der nachfolgenden Beschreibung von Ausführungsbeispielen anhand der Zeichnung in Verbindung mit den Unteransprüchen.

Es zeigen:
Fig. 1 bis 4 vier unterschiedliche Ausführungsformen im Prinzipschaltbild,
Fig. 5 eine detaillierte Darstellung der Ausführungsform nach Fig. 4,
Fig. 6 ein Diagramm der zeitlichen Verläufe der im Schaltbild der Fig. 5 auftretenden wesentlichsten Spannungen.

Bei der Realisierung einer Ausführungsform der Erfindung könnte der Ultraschallschwinger (z. B. Piezoschwinger) direkt mit der kapazitiven Komponente seines elektrischen Widerstandes oder mit seiner mechanischen Schwingungsfähigkeit als frequenzbestimmendes Element in einen Oszillator einbezogen werden. Nachteilig ist jedoch, daß die Kapazität unterschiedlicher Schwinger bei gleicher Resonanzfrequenz stark unterschiedlich sein kann. Es wäre somit ein Abgleich des Oszillators auf den jeweiligen Schwinger notwendig.

Günstigere Bedingungen ergeben sich, wenn als frequenzbestimmendes Element ein vom Schwinger unabhängiges Bauelement dient.

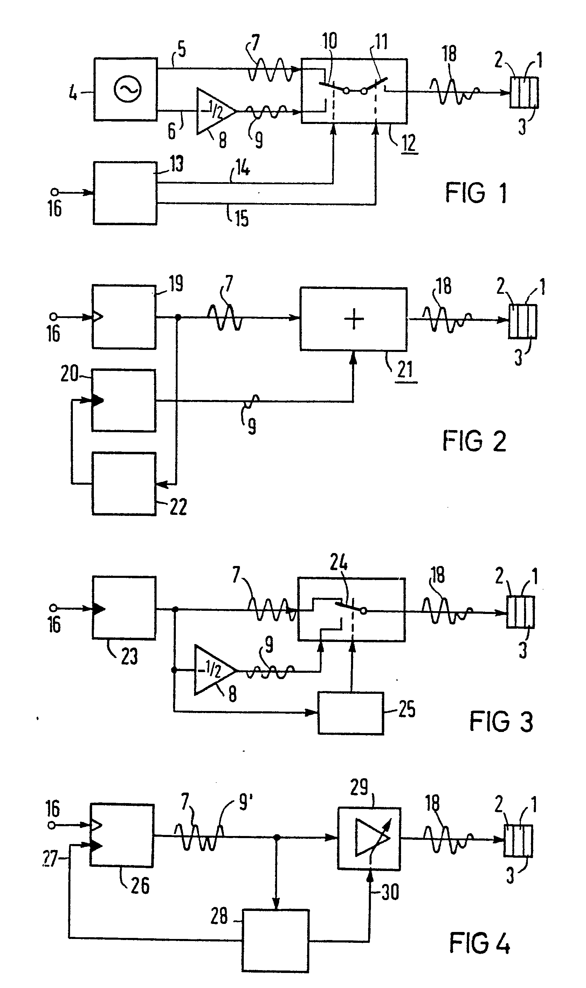

Das Prinzipschaltbild der Fig. 1 zeigt einen Ultraschallschwinger (Piezoschwinger) 1, der an der der Abstrahlfläche abgewandten Seite mit einem Dämpfungskörper 2 belegt ist. Die Abstrahlfläche ist zur Anpassung an das Untersuchungsmedium (hier biologisches Gewebe) mit einer $n \cdot \lambda/4$-Schicht 3 (n = 1, 3, 5 etc.) versehen, die aus einem Material besteht, dessen Wellenwiderstand etwa dem geometrischen Mittel aus Wellenwiderstand des Untersuchungsmediums und des Dämpfungskörpers entspricht. Als Material dient vorzugsweise Araldit. Auch mehrstufige oder stetige Anpaßschichten, wie sie von der Leitungstheorie her bekannt sind, können verwendet werden. Zur Ansteuerung des Ultraschallschwingers 1 mit Sinusschwingungen dient ein Oszillator 4, der als frequenzbestimmendes Element beispielsweise einen Schwingquarz oder elektrische LC-Schwingkreise beinhaltet. Der Oszillator 4 ist freilaufend, d. h. er erzeugt an seinen Ausgängen 5 und 6 eine Sinusspannung 7 von der Eigenschwingfrequenz des Ultraschallschwingers 1 kontinuierlich. Die Sinusspannung am Ausgang 6 des Oszillators 4 wird mittels Phasenumkehr- und Bedämpfungseinrichtung 8 in der Phase um 180° gedreht und gleichzeitig in etwa auf die halbe Amplitude gedämpft (Amplitudenbedämpfung an Vorrichtung 8 variabel einstellbar). Ergebnis ist dann die kontinuierliche Sinusschwingung 9 am Ausgang der Einrichtung 8. Da beide Sinusschwingungen 7 und 9 kontinuierlich sind, müssen die gewünschten Perioden mittels Analogschalter 10 bzw. 11 einer Schalteinrichtung 12 im entsprechenden Zeittakt herausgeschnitten werden. Die Ansteuerung der Schalter 10 bzw. 11 im erwünschten Sinne geschieht mittels Ansteuerlogik 13 über Ansteuerleitungen 14 bzw. 15. Die Ansteuerlogik 13 ist so aufgebaut, daß sie nach Startimpuls am Starteingang 16 über eine Abfrageleitung zum Oszillator 4 den nächstfolgenden Nulldurchgang der Sinusschwingung 7 erkennt und in der gezeichneten Schaltstellung des Schalters 10 den Schalter 11 über die Schaltleitung 15 schließt. Nach vier weiteren Nulldurchgängen der Sinusschwingung 7 (Ende der zweiten Periode) wird dann von der Logik 13 der Umschalter 10 über die Schaltleitung 14 in die gestrichelte Schaltstellung gesteuert. Damit wird also von der Sinusschwingung 7 auf die Sinusschwingung 9 umgeschaltet. Nach Beendigung einer vollen Periode dieser Sinusspannung 9 (dritter Nulldurchgang bzw. erste Wiederholung des Nulldurchgangs in Richtung z. B. negativer Amplitude) wird von der Logik 13 über die Steuerleitung 15 der Schalter 11 wieder geöffnet. Als Produkt dieses Ansteuermechanismus ergibt sich die Sinusausgangsschwingung 18, die aus insgesamt zwei Perioden der Sinusschwingung 7 und einer sich mit 180° Phasensprung anschließenden Periode der Sinusschwingung 9 zusammensetzt. Beim Ausführungsbeispiel der Fig. 1 sind Startimpulse am Eingang 16 für die Logik 13 im allgemeinen die Taktimpulse jenes Taktgenerators (nicht dargestellt), die im Sendetakt der Ultraschallaussendung abgegeben werden.

Soll der Oszillator 4 nur kurzzeitig während der Sendephasen auf Schwingbetrieb geschaltet werden (Verzicht auf kontinuierlichen Betrieb), so müssen die frequenzbestimmenden Elemente des Oszillators 4 kurze Ein- bzw. Ausschwingzeiten aufweisen. Das Ein- und Ausschwingen wird jedoch durch das Übergangsverhalten des frequenzbestimmenden Elements charakterisiert. Von Vorteil kann es daher sein, in einem solchen Anwendungsfall als frequenzbestimmendes Glied ein relativ breitbandiges und daher schnell einschwingendes Frequenzglied einzusetzen. Oszillatoren, die diese Bedingungen erfüllen, sind beispielsweise der Wien-Brücken-Oszillator, der RC-Phasenschieber-Oszillator und der Oszillator mit einem Allpaß 2. Ordnung. Eine weitere Möglichkeit ist die, daß mit dem Ein- und Ausschalten dem frequenzbestimmenden Glied ein Dirac-ähnlicher Impuls aufgeschaltet wird. Ein solcher Impuls beschleunigt das Einschwingen und bremst das Ausschwingen. Im Prinzip können auch sämtliche der beschriebenen Oszillatortypen so gesteuert werden, daß sie jeweils eine bestimmte Zeitdauer vor Abgabe des Sendeimpulses vorbereitend auf Sendung geschaltet werden. Zum jeweils nachfolgenden Sendezeitpunkt steht dann am Oszillator 4 bereits die volle Sendeamplitude an. Nach Aussendung eines Sendesignals kann dann der Oszillator wieder abgeschaltet werden.

Einen im Aufbau relativ einfachen und problemlosen Oszillator erhält man hingegen unter Zugrundelegung eines Rechteckgenerators. Rechteckgeneratoren lassen sich leicht so konzipieren, daß sie praktisch ohne Verzögerung anschwingen (die Anfangswertbedingungen sind relativ einfach einzuhalten). Durch Integratoren kann man das Rechteck in ein Dreieck umformen. Aus dem Dreieck kann man ohne allzu großen Aufwand, beispielsweise durch Einsatz nichtlinearer Glieder und Tiefpässen od. dgl., ein Sinussignal erzeugen. Dieses Sinussignal ist kaum verklirrt. Die Anforderungen bezüglich der Abweichung von der reinen Sinusform sowie an Frequenzstabilität, Seitenbandrauschen usw. entsprechen dann von vornherein den in der Pulsechotechnik üblichen Forderungen.

Praktisch realisierbare Integratoren sind jedoch niemals frei von Nullpunktdrift. Aus diesem Grunde sollte also nicht das Rechtecksignal des Rechteckgenerators direkt integriert werden. Vielmehr sollte ein dreiecksgesteuerter Rechteckgenerator eingesetzt werden, dessen Dreieckspannung durch den Rechteckgenerator selbst erzeugt und in der beschriebenen Art durch Ausfilterung zum Sinus umgeformt wird. Hierfür empfiehlt sich als Grundelement in bevorzugter Ausgestaltung ein astabiler Oszillator. Ein astabiler Oszillator als triggerbarer Funktionsgenerator (er liefert Dreieck- und Rechtecksignal) kann auf ein logisches Signal hin im Nulldurchgang gestartet und/oder angehalten werden.

Die Ausführungsbeispiele der Fig. 2 bis 4 arbeiten mit astabilen Oszillatoren als Funktionsgeneratoren.

Die Fig. 2 zeigt wieder den Ultraschallschwinger 1 mit Dämpfungskörper 2 und Anpassungsschicht 3. Die Schaltungsanordnung zur Ansteuerung des Schwingers 1 umfaßt jetzt insgesamt zwei triggerbare Oszillatoren 19, 20, ein Addierglied 21 und eine logische Steuerschaltung 22. Auf einen Startimpuls am Starteingang 16 hin gibt der Oszillator 19 eine Doppelperiode der Sinusschwingung 7 ab, die über das Addierglied 21 unmittelbar zum Schwinger 1 gelangt. Das Ende dieser Doppelschwingung 7 wird von der Logik 22 (entweder aus den Nulldurchgängen oder aus oszillator-internen Signalen) erkannt. Sie startet daraufhin den zweiten triggerbaren Oszillator 20, der eine Periode Sinusschwingung 9 entgegengesetzter Phasenlage und etwa halber Amplitude über das Addierglied 21 an den Schwinger abgibt. Es ergibt sich somit wieder, bezogen auf den Schwinger 1, die Schwingungskombination 18, wie sie bereits im Ausführungsbeispiel der Fig. 1 dargestellt ist.

Das Ausführungsbeispiel der Fig. 3 zeigt eine Modifikation in dem Sinne, daß lediglich ein einziger triggerbarer Oszillator 23 eingesetzt ist, der auf Startimpuls am Eingang 16 hin insgesamt drei Perioden der Sinusschwingung 7 abgibt. Die ersten beiden Perioden dieser Sinusschwingung gelangen direkt über einen Schalter 24 in der gezeichneten Schaltstellung in Richtung Ultraschallschwinger 1. Das Ende der zweiten Periode wird wiederum durch eine Logikschaltung 25 erkannt, die daraufhin den Schalter 24 in die gestrichelte Schaltstellung schaltet. In dieser Schaltstellung gelangt jetzt das an der Einrichtung 8 invertierte und amplitudenmäßig halbierte Oszillatorsignal 9 mit der dritten und letzten Periode zum Schwinger 1. Es ergibt sich also wieder das erwünschte Kompositionssignal 18. Nach Zuschaltung dieser dritten Komponente, spätestens nach einem neuen Startsignal am Eingang 16 des Oszillators 23, muß der Schalter 24 wieder in die gezeichnete Ausgangsstellung zurückgebracht werden.

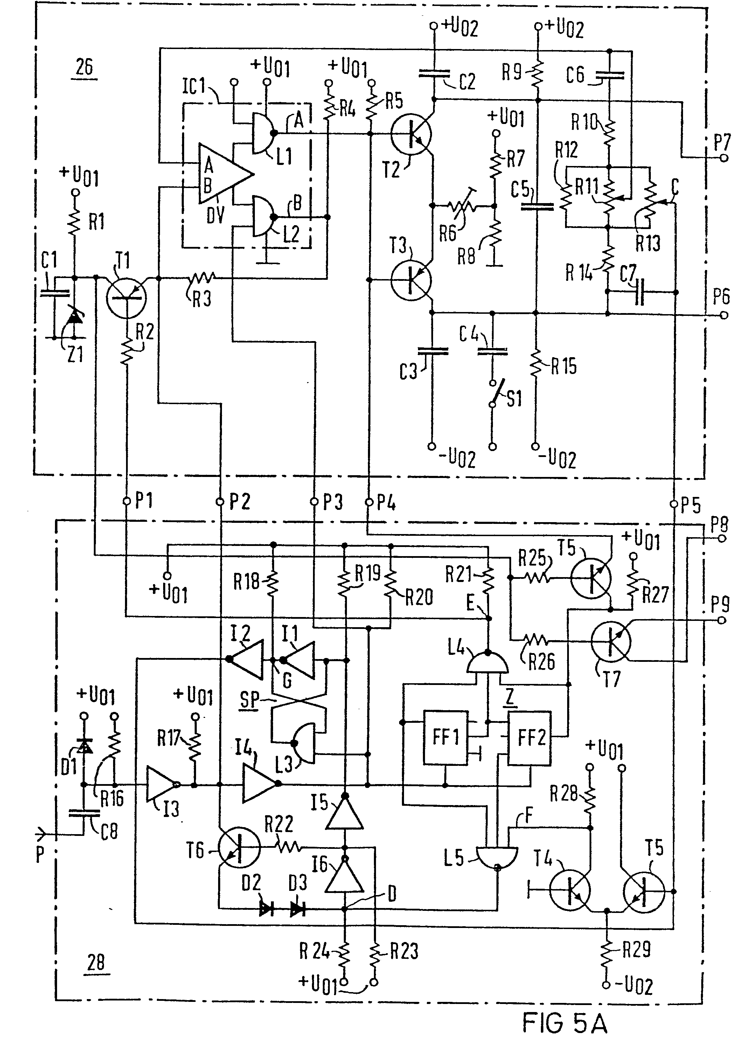

Die Fig. 4 zeigt nun im Prinzipschaltbild eine Ausführungsform mit einem Oszillator 26, der zwei Triggereingänge 16 und 27 aufweist. Bei Startimpuls am Eingang 16 erzeugt der Oszillator 26 an seinem Ausgang zunächst zwei Perioden der Sinusspannung 7. Das Ende der zweiten Periode wird durch die Logikschaltung 28 erkannt und mit einem zweiten Startimpuls für den Eingang 27 des Oszillators 26 beantwortet. Der Oszillator 26 erzeugt daraufhin eine phasenmäßig entgegengesetzt liegende dritte Periode. Die dritte Periode kann, wie in der Fig. 4 dargestellt, als Sinusspannung 9' dieselbe Amplitude wie die Sinusspannung 7 aufweisen. Um von einer solchen Schwingung auf halbe Amplitude zu kommen, muß dann die Periode 9' durch Steuerverstärker 29 auf die halbe Amplitude geregelt werden. Die Regelung erfolgt durch die Logikschaltung 28 über den Regeleingang 30 des Steuerverstärkers 29 zur Verstärkungsgradregelung. Ebensogut kann jedoch der Oszillator 26 auch so ausgebildet sein, daß er bei Startimpuls am Starteingang 27 eine dritte Periode Sinusschwingung halber Amplitude erzeugt. Diese Schwingung entspricht dann der Schwingung 9 der Ausführungsformen der Fig. 1 bis 3. In einem solchen Falle behält der Steuerverstärker 29 seine Normalverstärkung.

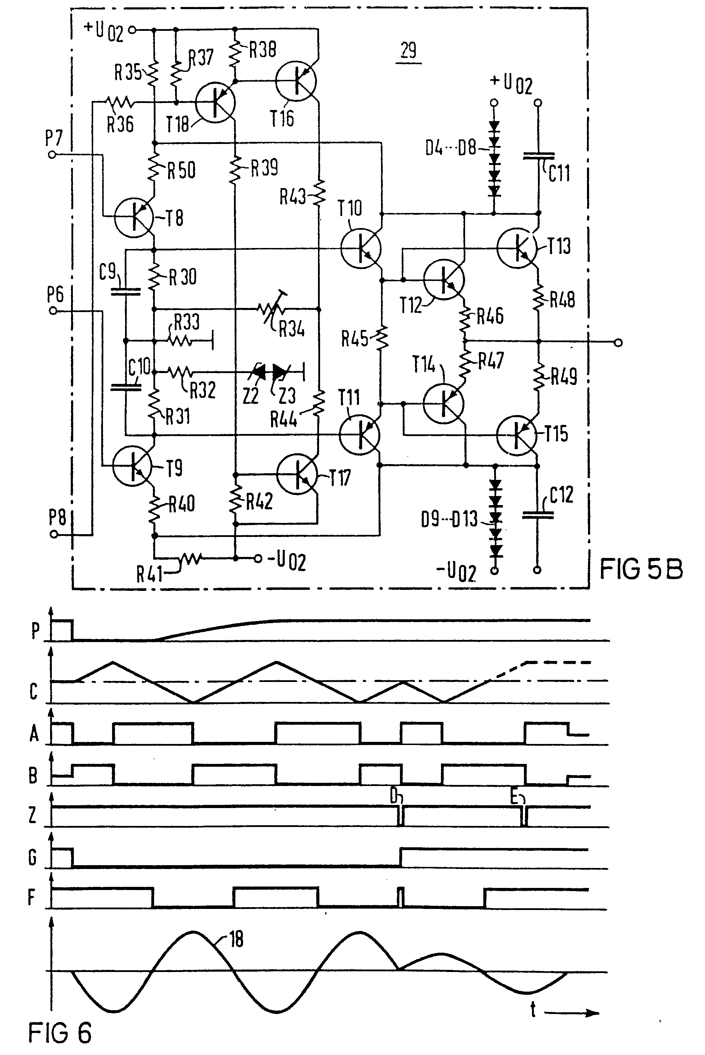

Eine detaillierte Ausführung des Ausführungsbeispiels der Fig. 4 ist im Schaltbild der Fig. 5 dargestellt. Die Funktionsweise der Schaltungsanordnung der Fig. 5 ergibt sich in Verbindung mit den Spannungsverläufen der Fig. 6 wie folgt:

In der Fig. 5 sind mit 26 wieder der Oszillator (triggerbarer Dreiecksgenerator), mit 29 der Steuerverstärker (Leistungs-Endverstärker) und mit 28 die Logiksteuerung bezeichnet. In Ruhelage ist der Transistor T1 im Oszillator 26 leitend, so daß der Eingang B des Komparators IC1 (mit Differenzverstärker DV und Logikgliedern L1 und L2) auf z. B. U 01/2 = 2,5 V festliegt. Dadurch liegt der Integrator, bestehend aus T2, T3, C2 − C7, R6 − R15 mit seinem Ausgang C ebenfalls auf z. B. 2,5 V. Mit der abfallenden Flanke des Startsignals P am Eingang der Ablaufsteuerungslogik 28 wird ein ca. 50 ns langer Impuls an P3 erzeugt, welcher den Zähler Z (mit Logikglied L3 und Inverter I1) und den Speicher SP (mit Flip-Flop FF1, FF2 und Logikgliedern L4, L5) auf Null setzt, so daß E auf log. 1 (z. B. U 01 = 5 V) geht und T1 sperrt. Gleichzeitig wird der Ausgang B des Komparators IC1 auf log. 1 gezwungen. Da der Integrator (Ausgang C) schnellen Spannungsänderungen nicht folgen kann, der Ausgang C aber auf Eingang A des Komparators zurückgekoppelt ist, bleibt der Komparator in der Ausgangsstellung log. A = 0 (0 V); log. B = 1 liegen, auch nachdem der Puls an P3 verschwunden ist. Die logische 0 am Ausgang A sperrt T2 und steuert T3 in den leitenden Zustand. T3 arbeitet jetzt als Konstantstromquelle auf C3 (und C4, falls der Schalter S1 für niedrigere Frequenzen geschlossen ist). Da C5 ≫ C3, C4, überträgt sich der Strom gleichartig auch auf C2 und lädt diesen Kondensator ebenfalls um. Die Spannung an Punkt C steigt nun zeitlinear bis zur Erreichung des an B liegenden Spannungswertes (z. B. 5 V). Geringfügige Überschreitung reicht aus, um den Komparator IC1 zum Umkippen zu veranlassen: Die Spannung am Punkt B sinkt, vergrößert die Differenzspannung zwischen Punkt A und B im Sinne einer Mitkopplung, bis der stabile Zustand A = 1, B = 0 erreicht ist. Der Integrator arbeitet in entgegengesetzter Richtung (T2 leitend, T3 gesperrt) bis zum unteren Umschlagpunkt (C = 0 V) usw. Die folgenden abfallenden Flanken des Ausgangs A werden im Zähler Z mitgezählt. 1/4 Periode vor Ende der 2. Vollschwingung steht der Zähler auf der Stellung 1,0. Mit dem Nulldurchgang geht Punkt F auf log. 1, so daß D auf log. 0 absinkt. Dadurch wird der Komparatoreingang B von 1 auf 0 gebracht und die Schwingung dadurch in die umgekehrte Phasenlage geworfen. Damit sinkt F erneut ab und gibt mit D = 1 den Komparatoreingang B wieder frei. Gleichzeitig wird über T6 der Speicher gesetzt und dieser sorgt dafür, daß die Verstärkung des Endverstärkers auf z. B. die Hälfte sinkt. Wiederum 1/4 Periode vor Ende der 3. Vollschwingung, mit dem Anstieg von A, geht E auf log. 0 und klemmt das Potential des Komparatoreingangs B auf z. B. 2,5 V fest. Der Integratorausgang C kann jetzt nurmehr bis auf diese Spannung absinken und bleibt dort stehen bis zum nächsten Startimpuls. In den (langen) Pulspausen hat der Kondensator C5 Gelegenheit, seine Ladung zu regenerieren.

Am Potentiometer R6 kann die Frequenz in engen Grenzen abgeglichen werden. Mit dem Potentiometer R11 lassen sich kleine Umsymmetrien der Dreiecksform gegenüber der Nullinie korrigieren. Mit dem Potentiometer R13 läßt sich der Beginn der 3. Periode in engen Grenzen variieren. An P6, P7 stehen identische Wechselstromsignale mit unterschiedlichen Gleichspannungen an, so daß die Ankopplung eines Komplementär-Eingangs des Leistungs-Endverstärkers 29 unproblematisch ist. Der Kollektorwiderstand dieser Stufe besteht während der ersten beiden Perioden aus R33 im Zusammenwirken mit R32, Z2, Z3. Der Widerstand R33 allein ergäbe eine Spannungsamplitude von mehr als z. B. ±20 V. Durch die Serienschaltung von R32, Z2, Z3 wird die Dreieckspitze stark abgeflacht, so daß die Sinusform schon gut angenähert wird. Die Kapazitäten der Schaltung (insbesondere von Z2, Z3) tun ein übriges zur Verrundung der Ecken durch Tiefpaßwirkung. Für die 3. Periode werden T16, T17 leitend gemacht, so daß sich R34 bis R36 zuschalten und den Kollektorwiderstand etwa halbieren, wodurch die Verstärkung bzw. Ausgangsamplitude halbiert wird (Einstellung durch R34). Auf eine »Verrundung« kann jetzt verzichtet werden, weil kein Sperrspannungsproblem vorliegt. Die Transistoren T10 bis T15 bilden die Leistungsstufe. Ihr Querstrom wird durch die Widerstände R30, R31, R43, R41 durch Gegenkopplung gleichstrommäßig automatisch so eingestellt, daß Übernahmeverzerrungen (im Bereich kleiner Spannungen) klein genug bleiben. Am Ausgang AUS des Leistungsendverstärkers 29 steht dann die erwünschte Kombinationsschwingung 18 gemäß Fig. 6 an.

## Patentansprüche

1. Verfahren zur Anregung von Ultraschallschwingern, insbesondere mit Güten von Q < 5, die in der Impuls-Echo-Technik, insbesondere bei der Untersuchung des menschlichen Körpers, eingesetzt werden, wobei zur Anregung im Sinne der Aussendung eines Ultraschall-Impulses dem Ultraschallschwinger eine vorgebbare Zahl von Perioden einer Sinus- oder sinusähnlichen Erregungsschwingung, z. B. auch Dreieckschwingung, mit solcher Frequenz zugeführt wird, die den Ultraschallschwinger in seiner Nutzresonanzfrequenz anregt, und wobei im Anschluß daran zur Kompensation von Nachschwingungen dem Ultraschallschwinger ein Sinus- bzw. sinusähnliches Stoppsignal mit einem Phasensprung von 180° gegenüber der Phasenlage der Erregungsschwingung zugeleitet wird, dadurch gekennzeichnet, daß das Stoppsignal genau aus einer einzelnen vollendeten Schwingperiode besteht, und daß es in der Amplitude auf einen solchen Wert bis etwa um die Hälfte kleiner als die Amplitude der Erregungsschwingung eingestellt wird, daß am Periodenende des Stoppsignals die Auslöschung der ausgesandten Ultraschallschwingung erreicht wird.

2. Verfahren nach Anspruch 1, dadurch gekennzeichnet, daß der Ultraschallschwinger (1) mit zwei Perioden einer Sinus- oder sinusähnlichen Schwingung (7) beaufschlagt wird, die den Schwinger in seiner Nutzresonanzfrequenz anregen.

3. Verfahren nach Anspruch 1 oder 2, dadurch gekennzeichnet, daß ein Ultraschallschwinger (1) mit einem Dämpfungskörper (2) auf der der Abstrahlfläche gegenüberliegenden Fläche des Schwingers, dessen akustischer Wellenwiderstand an den Wellenwiderstand des Ausbreitungsmediums angepaßt ist, mit der vorgebbaren Zahl von Perioden der Sinus- oder sinusähnlichen Schwingung (7) sowie im Anschluß daran mit dem Stoppsignal (9) beaufschlagt wird.

4. Schaltungsanordnung zur Durchführung des Verfahrens nach einem der Ansprüche 1 bis 3, mit einer Oszillatoreinrichtung (4 bis 30), die den Ultraschallschwinger (1) mit einer vorgebbaren Zahl von Perioden einer Sinus- oder sinusähnlichen Erregerschwingung (7) mit einer den Ultraschallschwinger (1) in seiner Nutzresonanzfrequenz anregenden Frequenz beaufschlagt und im Anschluß daran ein Sinus- bzw. sinusähnliches Stoppsignal mit einem Phasensprung von 180° erzeugt, dadurch gekennzeichnet, daß die Oszillatoreinrichtung so ausgebildet ist, daß das erzeugte Stoppsignal genau aus einer einzelnen vollendeten Schwingungsperiode besteht und amplitudenmäßig auf Werte bis etwa um die Hälfte kleiner als die Amplitude der Erregungsschwingung einstellbar ist.

5. Schaltungsanordnung nach Anspruch 4, dadurch gekennzeichnet, daß die Oszillatoreinrichtung (4, 8) bei Auftreten eines Startimpulses eine erste Sinusschwingung (7) mit der Nutzresonanzfrequenz des Ultraschallschwingers (1) und gleichzeitig eine zweite Sinusschwingung (9) derselben Frequenz, jedoch mit etwa halbierter Amplitude und 180° Phasensprung abgibt, und daß die Oszillatoreinrichtung ausgangsseitig mit einer Schalteinrichtung (10, 11) verbunden ist, die gesteuert durch eine Steuerlogik (13) zuerst aus der ersten Sinusschwingung (7) eine vorgebbare Zahl von Perioden und unmittelbar im Anschluß daran aus der zweiten Sinusschwingung (9) eine einzelne Periode als Stoppsignal selektiert und die selektierten Signale dem Ultraschallschwinger zuführt (Fig. 1).

6. Schaltungsanordnung nach Anspruch 5, dadurch gekennzeichnet, daß ein Oszillator (4) an zwei separaten Ausgängen (5, 6) die erste Sinusschwingung (7) erzeugt und zur Erzeugung der zweiten Sinusschwingung (9) einem (6) der beiden Ausgänge des Oszillators (4) eine Phasenumkehr- und Amplitudenbedämpfungseinrichtung (8) nachgeschaltet ist.

7. Schaltungsanordnung nach einem der Ansprüche 4 bis 6, dadurch gekennzeichnet, daß ein Oszillator (4) als frequenzbestimmendes Element wahlweise einen Schwingquarz oder elektrische LC-Schwingkreise umfaßt oder aber als Wien-Brücken-Oszillator oder RC-Phasenschieber-Oszillator oder als Oszillator mit einem Allpaß zweiter Ordnung ausgebildet ist.

8. Schaltungsanordnung nach Anspruch 4, dadurch gekennzeichnet, daß zwei triggerbare Oszillatoren (19, 20) vorhanden sind, von denen der erste bei Vorliegen eines Startimpulses (16) eine vorgebbare Zahl von Perioden der ersten Sinusschwingung (7) erzeugt und von denen der zweite Oszillator (20) mit Ende der letzten Periode der ersten Sinusschwingung (7) angestoßen wird und als Stoppsignal eine einzelne Periode der zweiten Sinusschwingung (9) mit einem Phasensprung von 180° erzeugt (Fig. 2).

9. Schaltungsanordnung nach Anspruch 8, dadurch gekennzeichnet, daß die beiden Ausgänge der Oszillatoren (19, 20) über ein Addierglied (21) miteinander verbunden sind.

10. Schaltungsanordnung nach Anspruch 4, dadurch gekennzeichnet, daß ein einziger Oszillator (23) eine Anzahl von Perioden Sinusschwingung erzeugt, die der Gesamtzahl Perioden aus erster und zweiter Sinusschwingung entspricht, wobei in zwei parallelen Kanälen diese Sinusschwingung (7) direkt bzw. über ein Amplitudenbedämpfungs- und Phasenumkehrglied (8) auf eine Schaltvorrichtung (24) gegeben werden, die den Schwinger (1) für die vorgebbare Periodenzahl der ersten Sinusschwingung (7) mit dem ersten Kanal und anschließend für eine nächstfolgende einzelne Periode der zweiten Sinusschwingung (9) mit dem zweiten Kanal verbindet (Fig. 3).

11. Schaltungsanordnung nach Anspruch 4, dadurch gekennzeichnet, daß ein Oszillator (26) mit zwei Schalteingängen (16, 27) vorgesehen ist, der an ein und denselben Sinusausgang bei Startimpuls am einen Schalteingang die vorgegebene Zahl an Perioden der ersten Sinusschwingung (7) abgibt und dessen zweitem Starteingang mit Ende der letzten Periode der ersten Sinusschwingung (7) ein weiterer Startimpuls zugeführt wird, der den Oszillator (27) zur Abgabe der vorgegebenen Zahl von Perioden der zweiten Sinusschwingung veranlaßt (Fig. 4).

12. Schaltungsanordnung nach Anspruch 11, dadurch gekennzeichnet, daß die zweite Sinusschwingung bereits die gegenüber der ersten Sinusschwingung in der Amplitude gedämpfte und in der Phase um 180° gedrehte zweite Sinusschwingung (9) ist.

13. Schaltungsanordnung nach Anspruch 11, dadurch gekennzeichnet, daß die zweite Sinusschwingung (9') eine mit der ersten Sinusschwingung (7) amplitudengleiche und lediglich um 180° phasenverschobene Sinusschwingung ist, die durch Amplitudenbedämpfung, vorzugsweise Verstärkungsgradabsenkung (29), auf den niedrigeren Amplitudenwert bedämpft wird.

14. Schaltungsanordnung nach einem der Ansprüche 8 bis 13, dadurch gekennzeichnet, daß die Oszillatoren (19, 20; 23; 26), die bereits von sich aus eine fest vorgebbare Zahl von Perioden der ersten (7) bzw. zweiten (9) Sinusschwingung erzeugen, astabile Oszillatoren beinhalten.

15. Schaltungsanordnung nach Anspruch 14, dadurch gekennzeichnet, daß die Oszillatoren astabile Rechteckgeneratoren mit nachgeschaltetem Integrator sind.

16. Schaltungsanordnung nach Anspruch 15, dadurch gekennzeichnet, daß zur Umwandlung der Dreieck- in eine Sinusschwingung nichtlineare Glieder, z. B. Amplitudenbegrenzer und Tiefpässe od. dgl., nachgeschaltet sind.

**Claims**

1. A process for exciting ultrasonic oscillators, in particular with Q-factors of $Q < 5$, which are used in pulse echo technology in particular for the investigation of the human body, wherein for purposes of excitation in terms of the transmission of an ultrasonic pulse the ultrasonic oscillator ist supplied with a predeterminable number of periods of a sinusoidal or sine-like excitation oscillation, e. g. a triangular oscillation, of a frequency which is such as to excite the ultrasonic oscillator at its useful resonance frequency, and wherein subsequently, in order to compensate follow-up oscillations the ultrasonic oscillator ist supplied with a sinusoidal or sine-like stop signal exhibiting a phase jump of 180° in comparison to the phase state of the excitation oscillation, characterised in that the stop signal consists precisely of one individual, completed oscillation period, and that it is set in amplitude to a value up to approximately half that of the excitation oscillation such that at the end of the period of the stop signal the transmitted ultrasonic oscillation is cleared.

2. A process as claimed in claim 1, characterised in that the ultrasonic oscillator (1) is supplied with two periods of a sinusoidal or sine-like oscillation (7) to excite the oscillator at its useful resonance frequency.

3. A process as claimed in claim 1 or claim 2, characterised in that an ultrasonic oscillator (1) is provided with an attenuating body (2) arranged on that surface of the oscillator which is opposite the irradiation surface and whose acoustic surge impedance is matched to the surge impedance of the propagation medium, to which is supplied the predeterminable number of periods of the sinusoidal or sine-like oscillation (7) and then the stop signal (9).

4. A circuit arrangement for the implementation of the process claimed in one of claims 1 to 3, with an oscillator device (4 to 30) which supplies the ultrasonic oscillator (1) with a predeterminable number of periods of a sinusoidal or sine-like excitation oscillation (7) of a frequency which serves to excite the ultrasonic oscillator (1) at its useful resonance frequency, and then produces a sinusoidal or sine like stop signal with a phase jump of 180°, characterised in that the oscillator device is designed in such manner that the generated stop signal consists exactly of one individual completed oscillation period and can be adjusted in amplitude to values of up to approximately half the amplitude of the excitation oscillation.

5. A circuit arrangement as claimed in claim 4, characterised in that on the occurrence of a start pulse the oscillator device (4, 8) emits a first sinusoidal oscillation (7) for the useful resonance of the ultrasonic oscillator (1) and at the same time a second sinusoidal oscillation (9) of the same frequency but of approximately half the amplitude and 180° phase jump, and that at its output the oscillator device is connected to a switching device (10, 11) which, under the control of a control logic element (13), firstly selects a predeterminable number of periods from the first sinusoidal oscillation (7) and then selects an individual period stop signal from the second sinusoidal oscillation (9), and conducts the selected signals to the ultrasonic oscillator (Figure 1).

6. A circuit arrangement as claimed in claim 5, characterised in that an oscillator (4) produces the first sinusoidal oscillation (7) at two separate outputs (5, 6), and for the production of the second sinusoidal oscillation (7) a phase reversal and amplitude attenuating device (8) is connected following one (6) of the two outputs of the oscillator (4).

7. A circuit arrangement as claimed in one of claims 4 to 6, characterised in that as a frequency determining element an oscillator (4) comprises either an oscillating quartz crystal or electrical LC oscillatory circuit or is designed as a Wienbridge sinusoidal oscillator or RC phaseshift oscillator or an oscillator featuring an all-pass filter of the second order.

8. A circuit arrangement as claimed in claim 4, characterised in that two triggerable oscillators (19, 20) are provided, the first of which produces a predeterminable number of periods of the first sinusoidal oscillation (7) in the presence of a start pulse (16), and the second of which (20) is started at the end of the last period of the first sinusoidal oscillation (7), and by way of stop signal produces one individual period of the second sinusoidal oscillation (9) with a phase jump of 180° (Figure 2).

9. A circuit arrangement as claimed in claim 8, characterised in that the two outputs of the oscillators (19, 20) are connected to one another via an adder element (21).

10. A circuit arrangement as claimed in claim 4, characterised in that one single oscillator (23) produces a number of periods of sinusoidal oscillation which corresponds to the total number of periods of the first and second sinusoidal oscillations, wherein this sinusoidal oscillation (7) is fed in two parallel channels either directly or via an amplitude attenuating and phase reversal element (8) to a switching device (24) which connects the oscillator (1) to the first channel for the predeterminable number of periods of the first sinusoidal oscillation (7), and then to the second channel for a following individual period of the second sinusoidal oscillation (9) (Figure 3).

11. A circuit arrangement as claimed in claim 4, characterised in that an oscillator (26) is provided which possesses two switching inputs (16, 27) and which, in the event of a start pulse at one switching input emits the predetermined number of periods of the first sinusoidal oscillation (7) at one and the same sine output, and whose second start input is supplied, at the end of the last period of the first sine oscillation (7), with a further start pulse which causes the oscillator (27) to emit the predetermined number of periods of the second sine oscillation (Figure 4).

12. A circuit arrangement as claimed in claim 11, characterised in that the second sine oscillation is itself the second sine oscillation (9) which is attenuated in amplitude relative to the first sine oscillation and is rotated in phase by 180°.

13. A circuit arrangement as claimed in claim 11, characterised in that the second sine oscillation (9') is a sine oscillation which is equal in amplitude to the first sine oscillation (7) and is displaced in phase merely by 180° and which is attenuated to the lower amplitude value by means of amplitude attenuation, preferably a reduction in the degree of amplification (29).

14. A circuit arrangement as claimed in one of claims 8 to 13, characterised in that the oscillators (19, 20; 23; 26) which in themselves produce a permanently predeterminable number of periods of the first (7) and second (9) sine oscillation, contain astable oscillators.

15. A circuit arrangement as claimed in claim 14, characterised in that the oscillators are astable rectangular generators followed by an integrator.

16. A circuit arrangement as claimed in claim 15, characterised in that for conversion of the triangular oscillation into a sinusoidal oscillation, non-linear elements e. g. amplitude limiters and low-pass filters or the like are connected thereafter.

## Revendications

1. Procédé pour exciter des émetteurs d'ultrasons, particulièrement à facteur de qualité Q < 5, utilisables en technique impulsion-échos, notamment pour l'examen du corps humain, du type dans lequel on applique à l'émetteur d'ultrasons, pour l'émission d'une impulsion ultrasonore, un nombre prédéterminé de périodes d'une oscillation d'excitation sinusoïdale ou quasi-sinusoïdale, par exemple également une oscillation triangulaire, d'une fréquence qui excite l'émetteur d'ultrasons dans sa fréquence de résonance utile, et dans lequel on applique ensuite à l'émetteur d'ultrasons, en vue de la compensation d'oscillations après l'impulsion, un signal sinusoïdal ou quasi-sinusoïdal d'arrêt à déphasage brusque de 180° par rapport à la phase de l'oscillation d'excitation, caractérisé par le fait que le signal d'arrêt est constitué par une unique période d'oscillation complète et que son amplitude est ajustée à une valeur sensiblement inférieure de la moitié de l'amplitude de l'oscillation d'excitation et qui est telle qu'à la fin de la période d'un signal d'arrêt on obtient le déclenchement de l'oscillation ultrasonore émise.

2. Procédé selon la revendication 1, caractérisé par le fait que l'on applique à l'émetteur d'ultrasons (1) deux périodes d'une oscillation sinusoïsale ou quasi-sinusoïdale qui excite l'émetteur à sa fréquence de résonance utile.

3. Procédé selon la revendication 2, caractérisé par le fait qu'un émetteur d'ultrasons (1) est excité avec le nombre prédéterminé de périodes de l'oscillation sinusoïdale ou quasi-sinusoïdale (7) et ensuite avec le signal d'arrêt (9), par l'intermédiaire d'un corps amortisseur (2) porté par la face de l'émetteur d'ultrasons opposée à celle de l'émission du rayonnement, et dont l'impédance caractéristique est adaptée à l'impédance caractéristique du milieu de propagation.

4. Montage pour la mise en oeuvre de procédé selon l'une des revendications 1 à 3, comportant un dispositif oscillateur (4 à 30) appliquant à l'émetteur d'ultrasons (1) un nombre prédéterminé de périodes d'une oscillation d'excitation (7) sinusoïdale ou quasi-sinusoïdale d'une fréquence excitant l'émetteur d'ultrasons (1) à sa fréquence de résonance utile et fournissant ensuite un signal d'arrêt sinusoïdal ou quasi-sinusoïdal à déphasage brusque de 180°, caractérisé par le fait que le dispositif oscillateur est réalisé de telle manière que le signal d'arrêt qui est produit est constitué par une unique période d'oscillation complète et dont l'amplitude est susceptible d'être réglée à des valeurs qui sont à peu près de moitié inférieures à l'amplitude de l'oscillation d'excitation.

5. Montage selon la revendication 4, caractérisé par le fait que le dispositif oscillateur (4, 8) émet, à l'apparition d'une oscillation de démarrage, une première oscillation sinusoïdale (7) à fréquence de résonance utile de l'émetteur d'ultrasons (1) et en même temps une seconde oscillation sinusoïdale (9) de même fréquence mais d'amplitude divisée par deux et de déphasage brusque de 180°, et que le dispositif oscillateur est relié par sa sortie à un dispositif de commutation (10, 11) qui, commandé par un circuit logique de commande (13), sélectionne d'abord de la première oscillation sinusoïdale (7) un nombre prédéterminé de périodes et immédiatement après, de la seconde oscillation sinusoïdale (9), une seule période en tant que signal d'arrêt et applique les signaux sélectionnés à l'émetteur d'ultrasons (figure 1).

6. Montage selon la revendication 5, caractérisé par le fait qu'un oscillateur (4) produit, au niveau de deux sorties séparées (5, 6), la première oscillation sinusoïdale (7) alors que pour la production de la seconde oscillation sinusoïdale (9) on monte en aval de l'une (6) des deux sorties de l'oscillateur (4), un dispositif (8) d'inversion de phase et d'amortissement de l'amplitude.

7. Montage selon l'une des revendications 4 à 6, caractérisé par le fait qu'un oscillateur (4) comporte, en tant qu'élément déterminant la fréquence, au choix, un cristal piézoélectrique ou un circuit oscillant LC ou est réalisé sous la forme d'un oscillateur à pont de Wien ou d'un oscillateur déphaseur RC ou d'un oscillateur à passe-tout du second ordre.

8. Montage selon la revendication 4, caractérisé par le fait que l'on prévoit deux oscillateurs (19, 20) susceptibles d'être déclenchés et dont le premier, lors de la présence d'une impulsion de démarrage (16), produit un nombre prédéterminé de périodes de la première oscillation sinusoïdale (7) alors que le second oscillateur (20) est attaqué à la fin de la dernière période de la première oscillation sinusoïdale (7) et fournit, comme signal d'arrêt, une période unique de la seconde oscillation sinusoïdale (9) avec un déphasage brusque de 180° (figure 2).

9. Montage selon la revendication 8, caractérisé par le fait que les deux sorties des oscillateurs (19, 20) sont reliées entre elles par un circuit additionneur (21).

10. Montage selon la revendication 4, caractérisé par le fait qu'un oscillateur unique (23) produit un nombre de périodes d'oscillations sinusoïdales qui correspond au nombre total de périodes de la première et de la seconde oscillation sinusoïdale, cette oscillation sinusoïdale (7) étant transmise, dans deux canaux parallèles, directement ou par l'intermédiaire d'un dispositif d'amortissement de l'amplitude et d'inversion de phase (8), à un dispositif de commutation (24) qui relie l'émetteur d'ultrasons (1), pour le nombre de périodes prédéterminées de la première oscillation sinusoïdale (7), avec le premier canal et, ensuite, pour une période suivante unique de la seconde oscillation sinusoïdale (9), avec le second canal (figure 3).

11. Montage selon la revendication 4, caractérisé par le fait qu'il est prévu un oscillateur (26) à deux entrées de commutation (16, 17), émettant à une seule et même sortie sinusoïdale, et pour une impulsion de démarrage se présentant au niveau d'une entrée de commutation, le nombre prédéterminé de périodes de la première oscillation sinusoïdale (7), et au niveau de sa seconde entrée de démarrage étant appliquée, à la fin de la dernière période de la première oscillation sinusoïdale (7), une autre impulsion de démarrage qui provoque l'émission par l'oscillateur (27) du nombre prédéterminé de périodes de la seconde oscillation sinusoïdale (figure 4).

12. Montage selon la revendication 11, caractérisé par le fait que la seconde oscillation sinusoïdale est celle qui, du point de vue de son amplitude est déjà amortie par rapport à la première oscillation sinusoïdale et sa phase est décalée de 180° (9).

13. Montage selon la revendication 11, caractérisé par le fait que la seconde oscillation sinusoïdale (9') est de même amplitude que la première oscillation sinusoïdale (7) mais simplement déphasée de 180° et elle est amortie par amortissement de l'amplitude, à la valeur d'amplitude plus basse, de préférence par diminution du facteur d'amplification (29).

14. Montage selon l'une des revendications 8 à 13, caractérisé par le fait que les oscillateurs (19, 20; 23; 26) qui produisent en eux-mêmes un nombre prédéterminé et fixe de périodes de la première (7) ou de la seconde (9) oscillations sinusoïdales, comportent des oscillateurs instables.

15. Montage selon la revendication 14, caractérisé par le fait que les oscillateurs instables sont des générateurs rectangulaires en aval desquels sont prévus des intégrateurs.

16. Montage selon la revendication 15, caractérisé par le fait que pour transformer l'oscillation triangulaire en une oscillation sinusoïdale, on prévoit en aval des dispositifs non linéaires, par exemple des limiteurs d'amplitude et des passe-bas ou autres dispositifs similaires.

FIG 1

FIG 2

FIG 3

FIG 4

FIG 5A

0 004 626

29

FIG 5B

FIG 6